# EUROPÄISCHE PATENTSCHRIFT

(11) **EP 2 907 903 B1**
(45) Veröffentlichungstag und Bekanntmachung des Hinweises auf die Patenterteilung: **04.04.2018**
(21) Anmeldenummer: 15000311.9
(22) Anmeldetag: 03.02.2015
(51) Int. Cl.: D01H 4/10, F16D 41/067, F16D 15/00

(54) **Offenend-Spinnrotor**
Open-end spinning rotor
Rotor pour métiers à filer à bout libre

(30) Priorität: 15.02.2014 DE 102014002102
(43) Veröffentlichungstag der Anmeldung: 19.08.2015
(73) Patentinhaber: Saurer Germany GmbH & Co. KG, 42897 Remscheid (DE)
(72) Erfinder: Wassenhoven, Heinz-Georg, 41065 Mönchengladbach (DE)

(56) Entgegenhaltungen:
- EP-B1- 1 156 142
- DE-B- 1 164 292
- DE-C- 289 888
- DE-C- 421 342
- DE-C- 908 460
- US-A- 2 561 745

## Beschreibung

Die vorliegende Erfindung betrifft einen Offenend-Spinnrotor, umfassend einen Rotorschaft, eine Rotortasse und eine Kupplungseinrichtung, die den Rotorschaft und die Rotortasse lösbar verbindet und ein mit dem Rotorschaft verbundenes Aufnahmeelement und ein mit der Rotortasse verbundenes Achselement aufweist.

In Offenend-Rotorspinnmaschinen eingesetzte Spinnrotoren müssen bei Bedarf, zum Beispiel bei Verschleiß oder um einen anderen Garntyp auf der Rotorspinnmaschine zu fertigen, gewechselt werden können. Je nach Art der Lagerung kann es den Wechsel der Offenend-Spinnrotoren erschweren oder gar unmöglich machen, wenn die Rotortasse und der Rotorschaft unlösbar miteinander verbunden sind. Deshalb wurde bereits eine Vielzahl von Überlegungen angestellt, wie die Verbindung zwischen Rotortasse und Rotorschaft lösbar gestaltet werden kann. Neben der einfachen Austauschbarkeit der Rotortasse steht die sichere Verbindung während des Betriebes des Spinnrotors im Vordergrund. Dabei ist zu beachten, dass der Spinnrotor bei Drehzahlen von 150.000 Umdrehungen pro Minute und mehr betrieben wird. Es sind Rotorspinnmaschinen bekannt, die bis zu 200.000 Umdrehungen pro Minute erreichen.

Die US 2 561 745 A und die DE 421 342 C offenbaren jeweils eine Anordnung zur Fixierung einer Spulenhülse auf einer Antriebswelle. Die Antriebswelle weist Klemmkörper auf, die in Ausparungen eines Trägerkörpers angeordnet sind. Die Aussparungen sind so ausgebildet, dass bei Drehung der Antriebswelle in Antriebsrichtung die Spulenhülse durch die Klemmkörper festgeklemmt wird und bei Drehung der Antriebswelle entgegen der Antriebsrichtung die Klemmung gelöst wird.

Eine Möglichkeit einer lösbaren Verbindung zwischen Rotorschaft und Rotortasse ist in der EP 1 156 142 B1 beschrieben. Diese wird mittels einer Kupplungsvorrichtung realisiert, die aus einer Magnetlagerung zur axialen Arretierung von Rotorschaft und Rotortasse und einer mechanischen Verdrehsicherung, die über Formschluss jede relative Rotationsbewegung zwischen Rotorschaft und Rotortasse verhindert, besteht. In den Rotorschaft ist eine Aufnahmehülse mittels einer Presspassung eingelassen. Die Aufnahmehülse weist in axialer Richtung hintereinander einen Permanentmagneten, einen Innenmehrkant und eine zylindrische Bohrung auf. Die Rotortasse weist einen Achsstummel beziehungsweise einen Ansatz aus ferromagnetischem Material mit einem Außenmehrkant, der mit dem Innenmehrkant korrespondiert, und einem Führungsansatz, der mit der zylindrischen Bohrung korrespondiert, auf.

Die zylindrische Bohrung soll den Führungsansatz spielfrei umschließen. Eine solche spielfreie Verbindung ist aufgrund der immer vorhandenen Fertigungstoleranzen jedoch nicht möglich. Um die Austauschbarkeit der Rotortasse zu gewährleisten, wird also immer ein Spiel zwischen der zylindrischen Bohrung und dem Führungsansatz nötig sein. Aber selbst bei einem geringen Spiel, das sich im Bereich weniger hundertstel Millimeter bewegt, können bei den hohen Drehzahlen, mit denen der Spinnrotor rotiert, Unwuchtkräfte entstehen, die den Antrieb und/oder die Lagerung des Spinnrotors schädigen können. Die Unwucht entsteht dabei durch den Achsversatz zwischen Rotortasse und Rotorschaft.

Es ist daher die Aufgabe der vorliegenden Erfindung, den Spinnrotor so weiterzuentwickeln, dass die Rotortasse leicht ausgetauscht werden kann und gleichzeitig eine zuverlässige Zentrierung von Rotortasse und Rotorschaft erreicht wird.

Die Aufgabe wird erfindungsgemäß durch die kennzeichnenden Merkmale des Anspruches 1 gelöst. Vorteilhafte Weiterbildungen der Erfindung sind Gegenstand der Unteransprüche.

Zur Lösung der Aufgabe umfasst die Kupplungseinrichtung drei Klemmkörper, die zwischen einer Kontur des Aufnahmeelementes und einer Kontur des Achselementes angeordnet sind. Erfindungsgemäß sind die Kontur des Aufnahmeelementes, die Kontur des Achselementes und die Klemmkörper so ausgebildet, dass durch Antreiben des Rotorschaftes zunächst eine relative Drehbewegung zwischen dem Aufnahmeelement auf der einen Seite und den Klemmkörpern und dem Achselement auf der anderen Seite entsteht, dass durch die relative Drehbewegung die Klemmkörper zwischen der Kontur des Achselementes und der Kontur des Aufnahmeelementes eingeklemmt werden und dass dadurch eine kraftschlüssige Übertragung des Antriebsmomentes von dem Rotorschaft auf die Rotortasse erfolgt.

Durch die erfindungsgemäße Kupplungseinrichtung erfolgt eine zuverlässige Zentrierung der Rotortasse, und es ist gleichzeitig eine leichte Austauschbarkeit der Rotortasse gewährleistet. Um dies zu erreichen, erfolgt die Zentrierung erst beim Anlaufen des Spinnrotors, oder anders ausgedrückt, durch das Antreiben des Rotorschaftes. Im Ruhezustand des Spinnrotors, das heißt, bei nicht angetriebenem Rotorschaft, lässt sich das Achselement der Rotortasse leicht gegenüber dem Aufnahmeelement des Rotorschaftes verschieben. Die Kontur des Aufnahmeelementes, die Kontur des Achselementes und die Klemmkörper sind so ausgebildet, dass es eine Position gibt, in der die Klemmkörper zwischen der Kontur des Aufnahmeelementes und der Kontur des Achselementes ausreichend Spiel aufweisen. Die Klemmkörper sind zumindest begrenzt beweglich angeordnet, damit sich das System aus Achselement, Aufnahmeelement und Klemmkörpern beim Antreiben des Rotorschaftes zentrieren kann. Die Wirkungsweise beruht dabei auf der Massenträgheit der Rotortasse. Da das Aufnahmeelement, das Achselement und die Klemmkörper nicht starr miteinander verbunden sind, verbleiben die Klemmkörper und das Achselement beim Anlaufen des Rotorschaftes für einen kurzen Moment in ihrem Ruhezustand. Dadurch entsteht die relative Drehbewegung zwischen dem Aufnahmeelement auf der einen und den Klemmkörpern und dem Achselement auf der anderen Seite. Sobald die Klemmkörper zwischen der Kontur des Aufnahmeelementes und der Kontur des Achselementes eingeklemmt sind, ist die Verbindung absolut spielfrei. Der Klemmzustand wird dabei sicher aufrechterhalten und damit die kraftschlüssige Übertragung des Antriebsmomentes von dem Rotorschaft auf die Rotortasse, solange der Rotorschaft angetrieben wird. Nachdem der Spinnrotor abgebremst worden ist und wieder in den Ruhezustand übergeht, löst sich der Klemmzustand entweder von alleine und die Klemmung kann beim manuellen Wechsel der Rotortasse leicht durch minimales Verdrehen der Rotortasse aufgehoben werden.

Die Kontur des Aufnahmeelementes, die Kontur des Achselementes und die Klemmkörper sind so ausgebildet, dass die Klemmkörper unabhängig von der Antriebsrichtung des Rotorschaftes beim Antreiben des Rotorschaftes zwischen der Kontur des Aufnahmeelementes und der Kontur des Achselementes eingeklemmt werden. Auf diese Weise ist es möglich, dass der Spinnrotor in Abhängigkeit der gewünschten Garndrehung in unterschiedlichen Richtungen angetrieben werden kann.

Die Klemmkörper sind als Rollenkörper ausgebildet.

Im Prinzip kann die Kupplungseinrichtung mehr als drei Klemmkörper aufweisen, es ist jedoch am günstigsten, genau drei Klemmkörper zu verwenden. Bei genau drei Klemmkörpern werden in jedem Fall alle Klemmkörper gleichmäßig eingeklemmt.

Für eine Kupplungseinrichtung mit genau drei Klemmkörpern ist die Kontur des Aufnahmeelementes vorzugsweise dreieckförmig ausgebildet. Um die Rotortasse aus dem Rotorschaft zu entfernen, oder um die Rotortasse mit dem Rotorschaft zu verbinden, sind die Klemmkörper in den Ecken der dreieckförmigen Kontur angeordnet. Auf diese Weise ist ausreichend Spiel zwischen der Kontur des Aufnahmeelementes, der Kontur des Achselementes und den Klemmkörpern vorhanden, um eine einfache Austauschbarkeit der Rotortasse zu gewährleisten. Durch das Antreiben des Rotorschaftes werden die Klemmkörper in dem Bereich der Seiten der dreieckförmigen Kontur positioniert und so eingeklemmt.

Die Kontur des Achselementes ist vorzugsweise kreisförmig ausgebildet. Das heißt, das Achselement ist zylindrisch und damit rotationssymmetrisch. Es reicht aus, wenn nur die Kontur des Achselementes eine nicht rotationssymmetrische Form aufweist, zum Beispiel eine n-zählige radiärsymmetrische Form. Bei einem gleichseitigen Dreieck handelt es sich um eine dreizählige radiärsymmetrische Form.

Gemäß einer bevorzugten Ausführungsform der erfindungsgemäßen Kupplungseinrichtung ist dem Aufnahmeelement ein Käfig zugeordnet, der dazu ausgebildet ist, die Klemmkörper in dem Aufnahmeelement zu halten, wenn die Rotortasse aus der Kupplungseinrichtung gelöst wird. Der Käfig ist dabei so gestaltet, dass er die Beweglichkeit der Klemmkörper in Rotationsrichtung nicht einschränkt.

Die Kupplungseinrichtung kann zusätzlich Arretierungsmittel zur axialen Arretierung der Rotortasse aufweisen. Eine zusätzliche axiale Arretierung sorgt dafür, dass die Rotortasse auch vor dem Antreiben des Rotorschaftes und der damit verbundenen Fixierung von Achselement, Aufnahmeelement und Klemmkörpern eine definierte Position einnimmt.

Die Erfindung wird nachfolgend anhand eines in den Zeichnungen dargestellten Ausführungsbeispiels näher erläutert.

Es zeigen:
- Fig. 1: einen erfindungsgemäßen Offenend-Spinnrotor mit einer Kupplungseinrichtung zum lösbaren Verbinden von Rotorschaft und Rotortasse in Seitenansicht;
- Fig. 2: eine Schnittdarstellung durch die Kupplungseinrichtung eines erfindungsgemäßen Offenend-Spinnrotors;
- Fig. 3: die Kupplungseinrichtung gemäß Fig. 2 mit eingeklemmten Klemmkörpern.

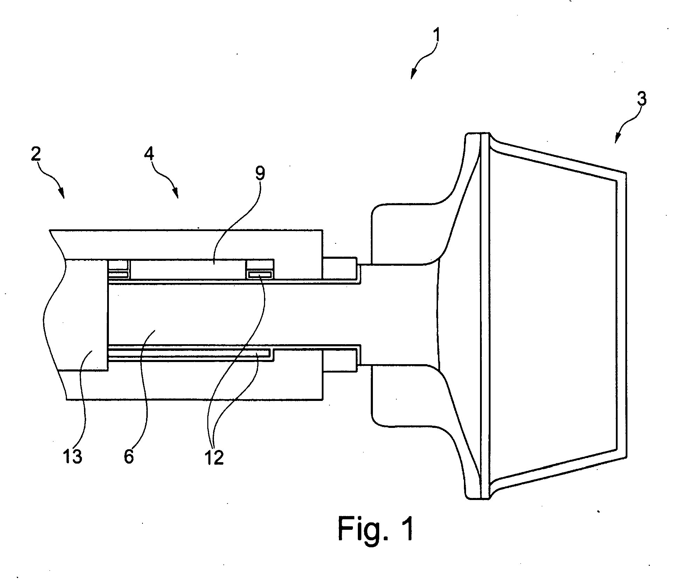

Die Fig. 1 zeigt einen erfindungsgemäßen Offenend-Spinnrotor 1. Der Offenend-Spinnrotor 1 weist einen Rotorschaft 2 auf. Der Rotorschaft 2 wird von einer nicht dargestellten Antriebseinrichtung, vorzugsweise einem Einzelantrieb, angetrieben. Die Rotortasse 3 ist über eine Kupplungseinrichtung 4 mit dem Rotorschaft 2 lösbar verbunden. Auf diese Weise kann die Rotortasse 3 bei Verschleiß oder zum Spinnen einer anderen Garnsorte ausgetauscht werden.

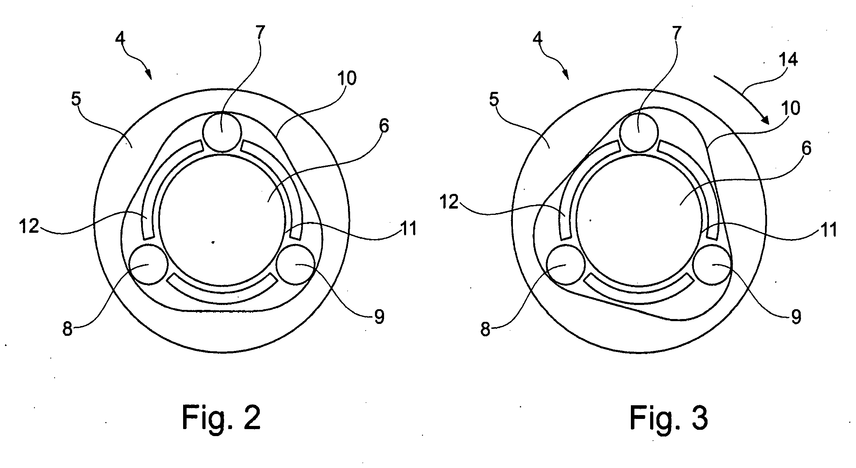

In der Schnittdarstellung in Fig. 2 ist die Kupplungseinrichtung 4 genauer dargestellt. Die Kupplungseinrichtung 4 weist ein Aufnahmeelement 5, ein Achselement 6 und drei als Rollenkörper ausgebildete Klemmkörper 7, 8, 9 auf. Dabei ist das Aufnahmeelement 5 fest mit dem Rotorschaft 2 verbunden. Rotorschaft 2 und Aufnahmeelement 5 können dabei einstückig als ein Bauteil ausgebildet sein. Oder das Aufnahmeelement 5 kann als Einsatz durch eine Presspassung mit dem Rotorschaft 2 verbunden sein. Entsprechend ist das Achselement 6 fest mit dem der Rotortasse 3 verbunden. Die Klemmkörper 7, 8, 9 sind in dem Aufnahmeelement 5 angeordnet und werden durch einen Käfig 12 gehalten. Wie in Fig. 1 zu sehen, ist der Käfig 12 mit den Klemmkörpern 7, 8, 9 in einer Umfangsnut des Aufnahmeelementes 5 angeordnet. Dadurch wird eine axiale Fixierung des Käfigs 12 mit den Klemmkörpern 7, 8, 9 in dem Aufnahmeelement 5 erreicht. Gleichzeitig bleibt eine Beweglichkeit in Rotationsrichtung erhalten. Der Käfig 12 sorgt auch bei dem entfernten Achselement 6 dafür, dass die Klemmkörper 7, 8, 9 in dem Aufnahmeelement 5 gehalten werden. Das Aufnahmeelement 5 weist eine dreieckförmige Kontur 10 auf. Wie man der Fig. 2 entnehmen kann, heißt dreieckförmig nicht zwingend dreieckig in einem engen geometrischen Sinne. Die Ecken der dreieckförmigen Kontur 10 sind abgerundet. Die dreieckförmige Kontur 10 weist eine dreizählige Radiärsymmetrie auf. Das heißt, bei einer Drehung der Kontur 10 um einen Winkel von 120° wird die Kontur auf sich selbst abgebildet. Allgemein formuliert ist eine n-zählige Radiärsymmetrie vorhanden, wenn sich die Anordnung durch eine Drehung um 360°/n auf sich selbst abbilden lässt. Bei einer nicht dargestellten Ausbildung der Kupplungs-einrichtung mit n Klemmkörpern weist die Kontur des Aufnahmeelementes vorzugsweise eine solche n-zählige Radiärsymmetrie auf.

Bei dem Ausführungsbeispiel, wie es in Fig. 2 dargestellt ist, ist das Achselement 6 zylinderförmig ausgebildet. Das heißt, die Kontur 11 des Achselementes 6 ist kreisförmig. Die Klemmkörper 7, 8, 9 sind zwischen der Kontur 10 des Aufnahmeelementes 5 und der Kontur 11 des Achselementes 6 angeordnet. Die Fig. 2 zeigt die Kupplungseinrichtung 4 im Ruhezustand, also bei nicht angetriebenem Rotorschaft 2. Die Klemmkörper 7, 8, 9 befinden sich im Bereich der Ecken der dreieckförmigen Kontur 10. In dieser Stellung lässt sich das Achselement 6 der Rotortasse 3 leicht aus dem Aufnahmeelement 5 des Rotorschaftes 2 herausziehen und entsprechend leicht wieder einführen.

Die Fig. 3 zeigt die Kupplungseinrichtung 4 unmittelbar nachdem der Antrieb des Offenend-Spinnrotors 1 in Gang gesetzt worden ist. Das Aufnahmeelement 5 dreht sich gemeinsam mit dem Rotorschaft 2 in Richtung des Pfeils 14. Die Klemmkörper 7, 8, 9 und das Achselement 5 sind nicht fest mit dem Rotorschaft 2 verbunden. Deshalb verharren sie aufgrund der Massenträgheit für einen kurzen Moment in ihrer Ausgangsposition. Damit entsteht eine relative Drehbewegung zwischen dem Aufnahmeelement 5 auf der einen Seite und dem Achselement 6 und den Klemmkörpern 7, 8, 9 auf der anderen Seite. Durch die relative Drehbewegung werden die Klemmkörper 7, 8, 9 in den Bereich der Seiten der dreieckförmigen Kontur 5 gebracht. In diesem Bereich ist der Abstand zwischen der dreieckförmigen Kontur 10 und der kreisförmigen Kontur 11 geringer als im Bereich der Ecken der dreieckförmigen Kontur 10. Dadurch werden die Klemmkörper 7, 8, 9 zwischen den Konturen 10 und 11 eingeklemmt und es kann ein Drehmoment von dem Rotorschaft 2 auf die Rotortasse 3 übertragen werden.

In dem dargestellten Beispiel wird der Rotorschaft 2 mit dem Aufnahmeelement 5 rechts herum in Richtung des Pfeils 14 gedreht. Aufgrund der Symmetrie der Konturen 10 und 11 funktioniert die Klemmung der Klemmkörper 7, 8, 9 und die Übertragung eines Drehmomentes von dem Rotorschaft 2 auf die Rotortasse 3 in gleicher Weise, wenn der Rotorschaft 2 links herum gedreht wird.

Wie in Fig. 1 zu sehen, weist die Kupplungseinrichtung außerdem einen Haltemagneten 13 auf. Der Haltemagnet 13 wirkt auf das Achselement 6, das aus einem ferromagnetischen Material besteht. Der Haltemagnet 13 sorgt damit für eine axiale Arretierung der Rotortasse 2.

## Patentansprüche

1. Offenend-Spinnrotor (1), umfassend einen Rotorschaft (2), eine Rotortasse (3) und eine Kupplungseinrichtung (4), die den Rotorschaft (2) und die Rotortasse (3) lösbar verbindet und ein mit dem Rotorschaft (2) verbundenes Aufnahmeelement (5) und ein mit der Rotortasse (3) verbundenes Achselement (6) aufweist,
**dadurch gekennzeichnet,**
**dass** die Kupplungseinrichtung (4) mindestens drei Klemmkörper (7, 8, 9) umfasst, die zwischen einer Kontur (10) des Aufnahmeelementes (5) und einer Kontur (11) des Achselementes (6) angeordnet sind,
**dass** die Kontur (10) des Aufnahmeelementes (5), die Kontur (11) des Achselementes (6) und die Klemmkörper (7, 8. 9) so ausgebildet sind, dass durch Antreiben des Rotorschaftes (2) zunächst eine relative Drehbewegung zwischen dem Aufnahmeelement (5) auf der einen Seite und den Klemmkörpern (7, 8, 9) und dem Achselement (6) auf der anderen Seite entsteht, dass durch die relative Drehbewegung die Klemmkörper (7, 8, 9) zwischen der Kontur (11) des Achselementes (6) und der Kontur (10) des Aufnahmeelementes (5) eingeklemmt werden, dass dadurch eine Übertragung des Antriebsmomentes von dem Rotorschaft (2) auf die Rotortasse (3) erfolgt,
**dass** die Kontur (10) des Aufnahmeelementes (5), die Kontur (11) des Achselementes (6) und die Klemmkörper (7, 8, 9) so ausgebildet sind, dass die Klemmkörper (7, 8, 9) unabhängig von der Antriebsrichtung des Rotorschaftes (2) beim Antreiben des Rotorschaftes (2) zwischen der Kontur (10) des Aufnahmeelementes (5) und der Kontur (11) des Achselementes (6) eingeklemmt werden und
**dass** die Klemmkörper (7, 8, 9) als Rollenkörper ausgebildet sind.

2. Offenend-Spinnrotor (1) nach Anspruch 1, **dadurch gekennzeichnet, dass** die Kupplungseinrichtung (4) genau drei Klemmkörper (7, 8, 9) aufweist.

3. Offenend-Spinnrotor (1) nach Anspruch 2, **dadurch gekennzeichnet, dass** die Kontur (10) des Aufnahmeelements (10) dreieckförmig ausgebildet ist.

4. Offenend-Spinnrotor (1) nach einem der vorherigen Ansprüche, **dadurch gekennzeichnet, dass** die Kontur (11) des Achselementes (6) kreisförmig ausgebildet ist.

5. Offenend-Spinnrotor (1) nach einem der vorherigen Ansprüche, **dadurch gekennzeichnet, dass** dem Aufnahmeelement (5) ein Käfig (12) zugeordnet ist, der dazu ausgebildet ist, die Klemmkörper (7, 8, 9) in dem Aufnahmeelement (5) zu halten, wenn die Rotortasse (3) aus der Kupplungseinrichtung (4) gelöst wird.

6. Offenend-Spinnrotor (1) nach einem der vorherigen Ansprüche, **dadurch gekennzeichnet, dass** die Kupplungseinrichtung (4) Arretierungsmittel (13) zur axialen Arretierung der Rotortasse (3) aufweist.

## Claims

1. Open-end spinning rotor (1), comprising a rotor shaft (2), a rotor cup (3) and a coupling device (4), which forms a releasable connection between the rotor cup (3) and the rotor shaft (2), and has a receiving element (5) connected to the rotor shaft (2) and an axle element (6) connected to the rotor cup (3), **characterised in that**
the coupling device (4) comprises at least three clamping bodies (7, 8, 9) which are arranged between a contour (10) of the receiving element (5) and a contour (11) of the axle element (6);
the contour (10) of the receiving element (5), the contour (11) of the axle element (6) and the three clamping bodies (7, 8, 9) are designed in such a way that, by driving the rotor shaft (2), a relative rotational motion first occurs between the receiving element (5) on one side, and the clamping bodies (7, 8, 9) and the axle element (6) on the other side; the clamping bodies (7, 8, 9) are clamped between the contour (11) of the axle element (6) and the contour (10) of the receiving element (5) by the relative rotational motion, thereby making a transmission of the drive torque from the rotor shaft (2) to the rotor cup (3) take place;
the contour (10) of the receiving element (5), the contour (11) of the axle element (6) and the clamping bodies (7, 8, 9) are designed in such a way that the clamping bodies (7, 8, 9) are clamped independently of the drive direction of the rotor shaft (2) when the rotor shaft (2) is driven between the contour (10) of the receiving element (5) and the contour (11) of the axle element (6); and
the clamping bodies (7, 8, 9) are designed as roller bodies.

2. Open-end spinning rotor (1) according to claim 1, **characterised in that** the coupling device (4) has exactly three clamping bodies (7, 8, 9).

3. Open-end spinning rotor (1) according to claim 2, **characterised in that** the contour (10) of the receiving element (10) is designed in a triangular form.

4. Open-end spinning rotor (1) according to one of the aforementioned claims, **characterised in that** the contour (11) of the axle element (6) is designed in a circular form.

5. Open-end spinning rotor (1) according to one of the aforementioned claims, **characterised in that** the receiving element (5) is assigned to a cage (12), which is designed so that the clamping bodies (7, 8, 9) are held in the receiving element (5) when the rotor cup (3) is detached from the coupling device (4).

6. Open-end spinning rotor (1) according to one of the aforementioned claims, **characterised in that** the coupling device (4) has a locking mechanism (13) for axial locking of the rotor cup (3).

## Revendications

1. Rotor de filature à bout libre (1), comprenant un axe de rotor (2), une cloche de rotor (3) et un dispositif d'accouplement (4) reliant de manière amovible l'axe du rotor (2) et la cloche du rotor (3) et un élément de réception (5) relié à l'axe de rotor (2) et présentant un élément d'axe (6) relié à la cloche de rotor (3), **caractérisé en ce que**,
le dispositif d'accouplement (4) comprend au moins trois organes de serrage (7, 8, 9) agencés entre un contour (10) de l'élément de réception (5) et un contour (11) de l'élément d'axe (6),
le contour (10) de l'élément de réception (5), le contour (11) de l'élément d'axe (6) et les organes de serrage (7, 8. 9) sont conçus de telle façon que, par l'entraînement de l'axe du rotor (2), un mouvement de rotation relatif est créé entre l'élément de réception (5) d'un côté et les organes de serrage (7, 8, 9) et l'élément d'axe (6) de l'autre côté, que, par le mouvement de rotation relatif les organes de serrage (7, 8, 9) sont serrés entre le contour (11) de l'élément d'axe (6) et le contour (10) de l'élément de réception (5), qu'une transmission du couple d'entraînement est générée de l'axe du rotor (2) sur la cloche de rotor (3),
que le contour (10) de l'élément de réception (5), le contour (11) de l'élément d'axe (6) et les organes de serrage (7, 8, 9) sont conçus de telle manière que les organes de serrage (7, 8, 9) sont serrés, indépendamment du sens d'entraînement de l'axe de rotor (2) lors de l'entraînement de l'axe de rotor (2), entre le contour (10) de l'élément de réception (5) et le contour (11) de l'élément d'axe (6) et
que les organes de serrage (7, 8, 9) sont conçus en tant que corps de galets.

2. Rotor de filature à bout libre (1) selon la revendication 1, **caractérisé en ce que** le dispositif d'accouplement (4) présente exactement trois organes de serrage (7, 8, 9).

3. Rotor de filature à bout libre (1) selon la revendication 2, **caractérisé en ce que** le contour (10) de l'élément de réception (10) est en forme de triangle.

4. Rotor de filature à bout libre (1) selon une des revendications précédentes, **caractérisé en ce que** le contour (11) de l'élément d'axe (6) est en forme circulaire.

5. Rotor de filature à bout libre (1) selon une des revendications précédentes, **caractérisé en ce que** à l'élément de réception (5), une cage (12) est affectée qui maintient les organes de serrage (7, 8, 9) dans l'élément de réception (5) lorsque la cloche de rotor (3) est détachée du dispositif d'accouplement (4).

6. Rotor de filature à bout libre (1) selon une des revendications précédentes, **caractérisé en ce que** le dispositif d'accouplement (4) présente un moyen de blocage (13) pour le blocage axial de la cloche de rotor (3).
